# EUROPÄISCHE PATENTSCHRIFT

(11) **EP 2 783 437 B1**
(45) Veröffentlichungstag und Bekanntmachung des Hinweises auf die Patenterteilung: **13.01.2016**
(21) Anmeldenummer: 12788108.4
(22) Anmeldetag: 20.10.2012
(51) Int. Cl.: H02B 1/32

(54) **MONTAGESCHIENE FÜR DEN INNENAUSBAU EINES SCHALTSCHRANKGEHÄUSES**
MOUNTING RAIL FOR CABINET
RAIL SUPPORT POUR UNE ARMOIRE ELECTRIQUE

(30) Priorität: 24.11.2011 DE 102011119277
(43) Veröffentlichungstag der Anmeldung: 01.10.2014
(73) Patentinhaber: RITTAL GmbH & Co. KG, 35745 Herborn (DE)
(72) Erfinder: BENNER, Rolf, 35745 Herborn (DE)
(74) Vertreter: Angerhausen, Christoph
(86) Internationale Anmeldenummer: PCT/DE2012/001019
(87) Internationale Veröffentlichungsnummer: WO 2013/075684

(56) Entgegenhaltungen:
- DE-C1- 19 712 362
- DE-C1- 19 917 290

## Beschreibung

Die Erfindung betrifft eine Montageschiene für den Innenausbau eines Schaltschrankgehäuses, mit einem Montageabschnitt, der an seinem ersten Ende einen Spannabschnitt und an seinem dem ersten Ende gegenüber angeordneten zweiten Ende einen Stützabschnitt aufweist. Eine derartige Montageschiene beschreibt die DE 199 17 290 C1.

Eine gattungsgemäße Montageschiene ist auch aus der DE 10 2008 052 291 A1 bekannt. Bei dieser ist der Stützabschnitt dazu ausgebildet, sich an der Rückwand des Schaltschrankgehäuses abzustützen, wobei der Spannabschnitt mittels Spannmitteln im Bereich der Vorderseite des Schaltschrankgehäuses verspannbar ist. Für das Verspannen weist der Spannabschnitt einen zur Vorderseite des Schaltschrankgehäuses gerichteten Schenkel auf, der an den Montageabschnitt angeschlossen ist, sowie eine Abwinklung, die im Winkel zum Schenkel orientiert ist, wobei die Abwinklung mindestens ein Stellglied aufweist. Das Stellglied bildet zumindest bereichsweise eine Spannfläche aus. Die Abwinklung weist eine Bohrung auf, die mit einer Gewindeaufnahme einer Schweißmutter fluchtet, die auf der der Spannfläche abgewandten Seite der Abwinklung aufgeschweißt ist. Als Spannmittel ist eine Schraube vorgesehen, die in die Schweißmutter einbringbar ist und über welche auf die Rückseite der Spannfläche eine Spannkraft ausgeübt werden kann. Weitere Innenausbauschienen sind auch aus der DE 197 37 673 C2, der DE 196 47 802 C1 und der DE 298 06 878 U1 bekannt.

Die vorbeschriebene Montageschiene hat den Nachteil, dass sie vergleichsweise umständlich in dem Schaltschrankgehäuse zu montieren ist. Dies ist dadurch bedingt, dass für die Betätigung der Spannschrauben der Spannabschnitt mit einem entsprechenden Werkzeug, beispielsweise einem Inbus-Schlüssel, hintergriffen werden muss. Da zwei Spannschrauben für eine ausreichende Fixierung der Montageschiene in dem Schaltschrankgehäuse notwendig sind, müssen diese bei der Befestigung der Montageschiene in dem Schaltschrankgehäuse auch gleichzeitig, das heißt schrittweise abwechselnd angezogen werden, um ein Verkanten der Montageschiene in dem Schaltschrankgehäuse zu vermeiden. Die Montageschiene hat den weiteren Nachteil, dass der Spannabschnitt viel Platz in Anspruch nimmt, wodurch die nutzbare Länge des Montageabschnitts begrenzt wird. Nicht zuletzt bedarf die aus dem Stand der Technik bekannte Montageschiene einer Vielzahl von Abkantungen, weshalb sie aufwändig in der Herstellung ist.

Es ist daher die Aufgabe der Erfindung, eine gattungsgemäße Montageschiene vorzuschlagen, die einfach in einem Schaltschrankgehäuse zu montieren ist, die eine große nutzbare Länge des Montageabschnitts aufweist und die sich einfacher technischer Mittel bedient sowie mit geringem Aufwand herstellbar ist.

Diese Aufgabe wird erfindungsgemäß von einer Montageschiene gemäß dem Patentanspruch 1 gelöst. Vorteilhafte Ausführungsformen der Erfindung sind Gegenstand der abhängigen Ansprüche 2 bis 10.

Die erfindungsgemäße Montageschiene zeichnet sich dadurch aus, dass der Spannabschnitt einen Kniehebel aufweist. Der Kniehebel wiederum weist eine Befestigungsseite, über welche der Kniehebel lösbar mit dem ersten Ende des Montageabschnitts verschraubt ist, und eine Spannseite auf, die mit der Befestigungsseite einen stumpfen Winkel einschließt. Bei den bevorzugten Ausführungsformen beträgt der zwischen der Spannseite und der Befestigungsseite eingeschlossene stumpfe Winkel zwischen 90° und 140°. Dadurch bedingt, dass der Kniehebel erfindungsgemäß unmittelbar an dem ersten Ende des Montageabschnitts verschraubt ist, wird erreicht, dass der Montageabschnitt und eine von diesem bereitgestellte System-Lochung, bis an den Kniehebel heranreichen kann, was die nutzbare Länge der Montageschiene für den Innenausbau gegenüber den bekannten Montageschienen vergrößert.

Bei der bevorzugten Ausführungsform der Erfindung ist der Montageabschnitt als U-Profil ausgebildet, das eine Montageseite aufweist, die zwei Abkantungen voneinander beabstandet. Dabei ist vorgesehen, dass die Montageseite mindestens eine Befestigungsaufnahme, vorzugsweise jedoch eine Mehrzahl von Befestigungsaufnahmen oder eine Systemlochung, aufweist.

Es ist weiterhin bevorzugt, dass das erste Ende des Montageabschnitts eine Umkantung aufweist, deren freies Ende sich parallel beabstandet zu der Montageseite erstreckt, wobei die Befestigungsseite auf der Umkantung schwenkbar gelagert ist. Dabei umfasst die Befestigungsseite vorzugsweise einen Durchlass für eine Schraube oder dergleichen, der mit einem weiteren Durchlass in dem freien Ende des Montageabschnitts fluchtet. Besonders bevorzugt ist die Umkantung an dem freien Ende des ersten Endes des Montageabschnitts abgekantet, wobei die Bohrung an dem ersten Ende des Montageabschnitts zwecks Ausübung einer ausreichenden Hebelkraft von der Umkantung beabstandet angeordnet ist. Fluchten die Bohrungen des Montageabschnitts und der Befestigungsseite weiterhin mit einer Gewindeaufnahme, welche mit der Bohrung an dem ersten Ende des Montageabschnitts kraftschlüssig verbunden ist, so kann der Kniehebel durch Verschrauben der Befestigungsseite mit dem ersten Ende des Montageabschnitts um die von der Umkantung gebildete Schwenkachse herum verschwenkt werden.

Es ist bevorzugt, dass der Kniehebel einstückig ausgebildet ist. Bei der bevorzugten Ausführungsform sind dabei die Befestigungsseite und die Spannseite als Abkantungen ausgebildet. In einfachster Ausführung ist ein solcher Kniehebel aus einem im Wesentlichen rechteckigen Stahlblech geeigneter Festigkeit abgekantet, wobei eine einzige Abkantung ausreichend ist, um einen erfindungsgemäßen Kniehebel herzustellen, bei dem die Befestigungsseite und die Spannseite einen Winkel, vorzugsweise einen stumpfen Winkel, einschließen. Diese einfachste Ausführungsform des Kniehebels weist an der Befestigungsseite beabstandet von der Abkantung eine Bohrung auf. Die Spannseite des Kniehebels kann zwei ausgestellte Ecken aufweisen, welche Krallen ausbilden, die sich beim Verspannen des Kniehebels zumindest teilweise in das Schaltschrankgehäuse eingraben.

Bei einer anderen Ausführungsform des Kniehebels ist dieser als ein U-Profil ausgebildet, das entlang seiner Innenseite auf dem Montageabschnitt aufgesetzt ist. Vorzugsweise ist bei dieser Ausführungsform auch der Montageabschnitt aus einem U-Profil ausgebildet, das Außenabmessungen aufweist, die derart auf die Innenabmessungen des Kniehebels abgestimmt sind, dass dieser formschlüssig oder annähernd formschlüssig auf dem Montageabschnitt aufsetzbar ist. Der als U-Profil ausgebildete Kniehebel weist parallele Flansche auf, die trapezförmig ausgebildet ist. Dabei ist vorgesehen, dass die Spannseite gerade von demjenigen freien Ende des U-Profils gebildet wird, das von dem Montageabschnitt abgewandt angeordnet ist. Auch bei dieser Ausführungsform des Kniehebels ist wiederum zweckmäßigerweise vorgesehen, dass das U-Profil des Kniehebels auf einer wie vorbeschrieben ausgestalteten Umkantung des Montageabschnitts schwenkbar gelagert ist. Weiterhin kann wiederum vorgesehen sein, dass die Befestigungsseite eine erste Bohrung aufweist, die mit einer zweiten Bohrung des ersten Endes des Montageabschnitts sowie mit einer Gewindeaufnahme des Montageabschnitts fluchtet.

Wie bereits angedeutet, kann für eine besonders wirksame Fixierung der Montageschiene an den Innenseiten des Schaltschrankgehäuses vorgesehen sein, dass der Stützabschnitt an seinem von dem Montageabschnitt abgewandten Ende, oder die Spannseite an ihrem von dem Montageabschnitt abgewandten Ende mindestens eine Kralle aufweist. Bevorzugt weisen sowohl der Stützabschnitt als auch die Spannseite an ihrem von dem Montageabschnitt abgewandten Ende mindestens eine Kralle auf.

Der Montageabschnitt weist je nach Ausführungsform vorzugsweise eine jeweils auf den Anwendungsbereich angepasste System-Lochung auf. Diese kann beispielsweise gleichmäßig beabstandete Bohrungen und/oder rechteckige Langlöcher aufweisen. Es ist auch eine Ausführungsform denkbar, bei der mindestens eine der auf dem Montageabschnitt ausgebildeten Befestigungsaufnahmen ein Langloch ist, das sich entlang der Längsrichtung der Montageschiene erstreckt, wobei das Langloch von parallelen Seiten begrenzt ist, die einen Abstand aufweisen, der größer als der Durchmesser eines Schaftes eines Bolzens und kleiner als der Durchmesser eines Kopfstücks des Bolzens ist. Zweckmäßigerweise weist das Langloch eine Aufweitung auf, bei der der Abstand der parallelen Seiten größer als der Durchmesser des Kopfstücks des Bolzens ist. Bevorzugt ist auch bei dieser Ausführungsform der Montageabschnitt aus einem U-Profil hergestellt, welches seitliche Abkantungen aufweist, die in Richtung zur Rückseite der Montageseite hin abgebogen sind und somit die Montageseite im verbauten Zustand der Montageschiene von der Gehäusewand oder dem Gehäuseboden beabstanden.

Bevorzugt weist die Montageschiene mindestens zwei sich entlang der Längsrichtung der Montageschiene erstreckende Langlöcher auf, die in Längsrichtung der Montageschiene hintereinander und beabstandet voneinander angeordnet sind, wobei jeweils benachbarte Langlöcher durch einen Steg, der die beiden Abkantungen miteinander verbindet, voneinander getrennt sind. Durch die Verwendung mehrerer Langlöcher, die durch Stege voneinander getrennt sind, anstelle von einem durchgehenden Langloch wird erreicht, dass die Stabilität des Montageabschnitts durch die Langlöcher nicht übermäßig beeinträchtigt wird.

Weitere Einzelheiten der Erfindung werden anhand der nachfolgenden Figuren erläutert. Dabei zeigt:
- Figur 1: den Montageabschnitt und den Spannabschnitt einer ersten Ausführungsform der Erfindung;
- Figur 2: eine Frontalansicht des Spannabschnitts der Ausführungsform gemäß Figur 1;
- Figur 3: die Ausführungsform gemäß den Figuren 1 und 2 im verbauten Zustand;
- Figur 4: den Montageabschnitt und den Spannabschnitt der bevorzugten Ausführungsform der Erfindung;
- Figur 5: die Montageschiene gemäß Figur 4 im verbauten Zustand;
- Figur 6: eine weitere Ausführungsform, die in Langlöcher eingesetzte Bolzen aufweist; und
- Figur 7: eine Veranschaulichung des Einsetzvorgangs eines Bolzens in das Langloch einer Montageschiene gemäß Figur 6.

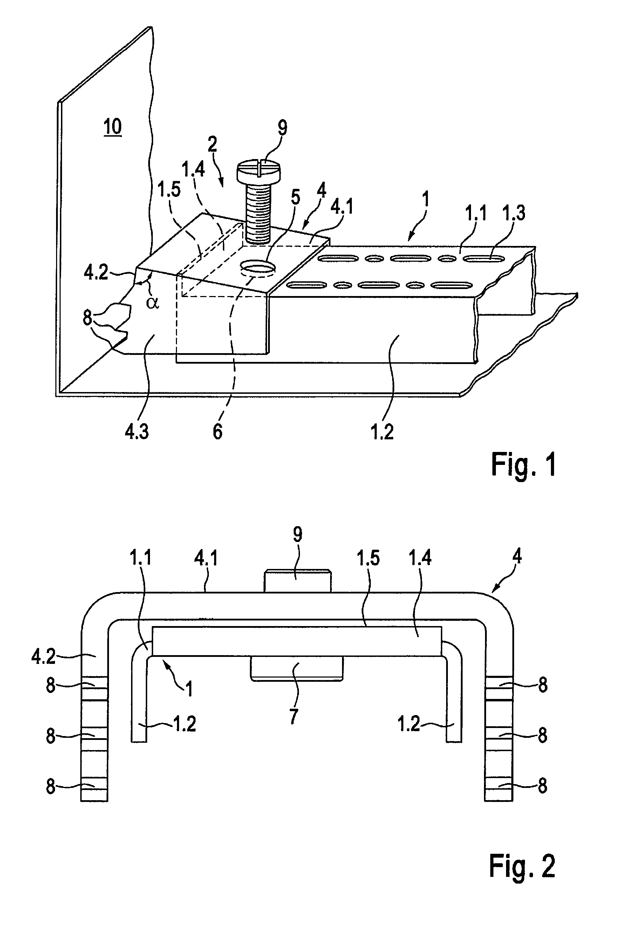

Eine Detailansicht des Spannabschnitts 2 einer ersten Ausführungsform der erfindungsgemäßen Montageschiene für den Innenausbau eines Schaltschrankgehäuses ist in Figur 1 dargestellt. Der Spannabschnitt 2 grenzt unmittelbar an das erste Ende des Montageabschnitts 1 und umfasst einen Kniehebel 4, mit einer Befestigungsseite 4.1 und einer Spannseite 4.2. Die Spannseite 4.2 und die Befestigungsseite 4.1 schließen einen Winkel α ein. Der Montageabschnitt 1 ist als U-Profil ausgebildet und weist neben einer Montageseite 1.1 zwei parallele und rechtwinklig von der Montageseite 1.1 abgekantete Abkantungen 1.2 auf, welche von der Montageseite 1.1 voneinander beabstandet werden. Die Montageseite 1.1 weist eine Systemlochung mit Befestigungsaufnahmen 1.3 auf, welche im vorliegenden Fall als zwei Reihen von abwechselnd kreisrunden und rechteckigen Ausschnitten ausgebildet sind. Die Montageseite 1.1 weist an ihrem dem Spannabschnitt 2 zugewandten Ende eine Umkantung 1.4 auf, welche wiederum ein freies Ende 1.5 aufweist, das sich parallel beabstandet zu der Montageseite 1.1 erstreckt. Die Umkantung 1.4 ist im Wesentlichen als eine sich von der Montageseite 1.1 senkrecht nach oben erstreckende Abkantung ausgebildet. Die Befestigungsseite 4.1 des Kniehebels 4 ist auf dem freien Ende 1.5 der Umkantung 1.4 schwenkbar gelagert. Der Kniehebel ist vorliegend einstückig und als ein U-Profil ausgebildet, das entlang seiner Innenseite auf dem Montageabschnitt 1 aufgesetzt ist. Der Kniehebel 4 weist parallele Flansche 4.3 auf, die trapezförmig ausgebildet sind. Die Spannseite 4.2 wird gerade von demjenigen freien Ende des U-Profils gebildet, das von dem Montageabschnitt 1 abgewandt angeordnet ist. Die Befestigungsseite 4.1 weist eine erste Bohrung 5 auf, die mit einer zweiten Bohrung 6 des ersten Endes des Montageabschnitts 1 sowie einer nicht sichtbaren Gewindeaufnahme 7 des Montageabschnitts 1 fluchtet. Die Gewindeaufnahme 7 ist vorliegend an der Unterseite der Montageseite 1.1 mit der Montageseite 1.1 verschweißt. Im einfachsten Fall wird sie von einer an der Rückseite der Montageseite 1.1 angeschweißten Mutter bereitgestellt. Die Spannseite 4.2 weist an ihrem dem Montageabschnitt 1 abgewandten Ende, welches in Montageposition der Montageschiene gerade dem der Gehäusewand 10 zugewandten Ende entspricht, Krallen 8 auf.

Für die Montage der Montageschiene in einem Schaltschrankgehäuse, vorzugsweise zwischen parallelen Gehäusewänden, kann die Montageschiene, vorzugsweise mit bereits vormontiertem, jedoch noch nicht fest verschraubtem Kniehebel 4, zwischen der ersten und der zweiten Gehäusewand positioniert werden. Sobald die Montageschiene ihre endgültige Position eingenommen hat, kann der Kniehebel, genauer dessen Befestigungsseite 4.1, auf dem Montageabschnitt, genauer auf der Montageseite 1.1, verschraubt werden. Durch das Anziehen der Schraube 9 wird die Befestigungsseite 4.1 an die Montageseite 1.1 angenähert, was zur Folge hat, dass der Kniehebel 4 um das freie Ende 1.5 der Umkantung 1.4 verschwenkt wird. Mit dem Verschwenken des Kniehebels 4 wird auch das untere Ende der Spannseite 4.2, an welchem die Krallen 8 vorgesehen sind, in Richtung auf die Gehäusewand 10 zu geschwenkt. Aufgrund der Hebelwirkung des wie vorbeschrieben gelagerten Kniehebels 4 können die Krallen 8 mit großer Kraft in die Oberfläche der Wand 10 getrieben werden, wobei die Montageschiene über den nicht dargestellten Stützabschnitt an der gegenüberliegenden Gehäusewand abgestützt wird.

In Figur 2 ist eine Frontalansicht des Spannabschnitts 2 dargestellt. In dieser Ansicht ist zu erkennen, dass die Umkantung 1.4 bei der dargestellten Ausführungsform als Abkantung der Montageseite 1.1 ausgebildet ist. Deutlich zu erkennen sind auch die Krallen 8 an der Spannseite 4.2. Die Schraube 9 tritt durch fluchtende Durchlässe in der Befestigungsseite 4.1 sowie der Montageseite 1.1 hindurch und wird in einer an der Rückseite der Montageseite 1.1 vorgesehenen Gewindeaufnahme 7, welche eine angeschweißte Mutter ist, aufgenommen. Es ist weiterhin zu erkennen, dass sowohl der Montageabschnitt 1 als auch der Kniehebel 4 als U-Profile mit parallelen Flanschen ausgebildet und damit kostengünstig herstellbar sind.

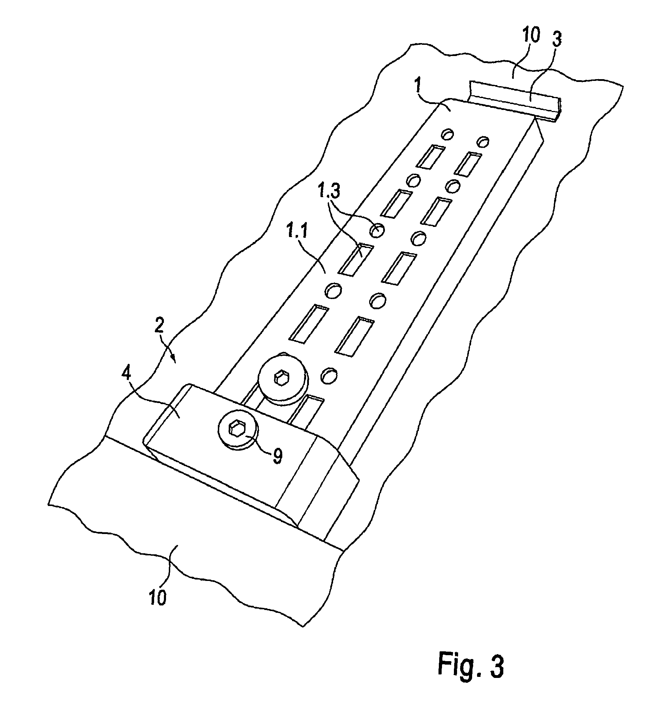

Figur 3 zeigt die in den Figuren 1 und 2 dargestellte Ausführungsform in der Montageposition. In dieser ist die Montageschiene zwischen gegenüberliegenden Gehäusewänden 10 verspannt. Der Stützabschnitt 3 weist eine Abkantung auf, welche im Wesentlichen formschlüssig an der Gehäusewand 10 anliegt. Der Montageabschnitt 1 weist eine Systemlochung mit Befestigungsaufnahmen 1.3 in der Montageseite 1.1 auf. Es ist zu erkennen, dass die Systemlochung unmittelbar bis an den Kniehebel 4 heranreicht, so dass annähernd die gesamte Länge der Montageschiene für den Innenausbau verwendet werden kann.

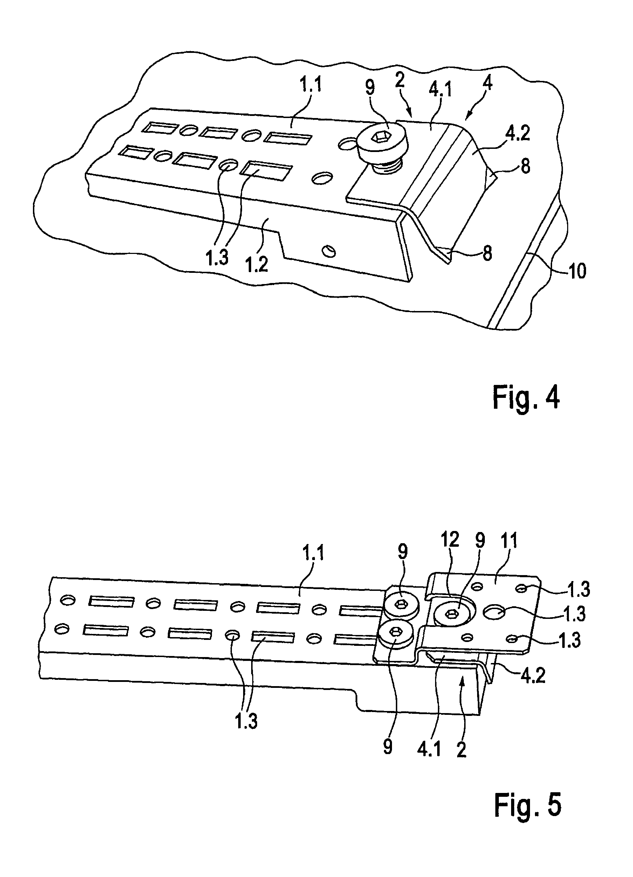

In Figur 4 ist die bevorzugte Ausführungsform der Erfindung dargestellt, bei der der Kniehebel 4 mit besonders einfachen technischen Mitteln realisiert ist. Der Kniehebel 4 besteht aus einem im Wesentlichen rechteckigen Stahlblech, welches parallel zu zwei Blechseiten abgekantet ist. Durch die Abkantung wird zum einen eine Befestigungsseite 4.1 und zum anderen eine Spannseite 4.2 gebildet. Die Befestigungsseite 4.1 und die Spannseite 4.2 schließen einen stumpfen Winkel ein, was zur Folge hat, dass die Spannseite 4.2 mit ihrer unteren Kante, welche die Krallen 8 aufweist, in Richtung auf die Gehäusewand 10 zu ragt, wenn die Befestigungsseite 4.1 parallel zu der Montageseite 1.1 angeordnet ist. Dadurch wird erreicht, dass die Spannseite 4.2 beim Verspannen der Montageschiene im Wesentlichen ausschließlich über ihre Krallen 8 mit der Gehäusewand 10 in Kontakt tritt, so dass die gesamte durch das Festziehen der Schraube 9 auf den Kniehebel ausgeübte Kraft über die spitzen Krallen 8 auf die Gehäusewand 10 übertragen wird. Es ist weiterhin zu erkennen, dass die Krallen 8 in einfachster Weise durch geringfügiges nach vorne Biegen zweier Ecken des rechteckigen Stahlblechs an der Spannseite 4.2 realisiert sind. Der Montageabschnitt ist wiederum in Form eines U-Profils ausgebildet, welches parallele Abkantungen 1.2 aufweist, die über eine Montageseite 1.1 miteinander verbunden und voneinander beabstandet sind.

Figur 5 zeigt die in Figur 4 dargestellte Ausführungsform, wobei ein Winkelstück 11 mit zusätzlichen Befestigungsaufnahmen 1.3 den Spannabschnitt 2 und insbesondere den Kniehebel 4 überragt, wodurch auch der Spannabschnitt 2 für den Innenausbau nutzbar gemacht wird. Neben den Befestigungsaufnahmen 1.3 ist auch eine Aussparung 12 vorgesehen, durch welche hindurch die Schraube 9 festgezogen bzw. gelöst werden kann. Das Winkelstück 11 ist selbst mit Hilfe zweier weiterer Schrauben 9 über die bis unmittelbar an den Kniehebel 4 heranreichende Systemlochung des Montageabschnitts 1 mit dem Montageabschnitt 1 verschraubt.

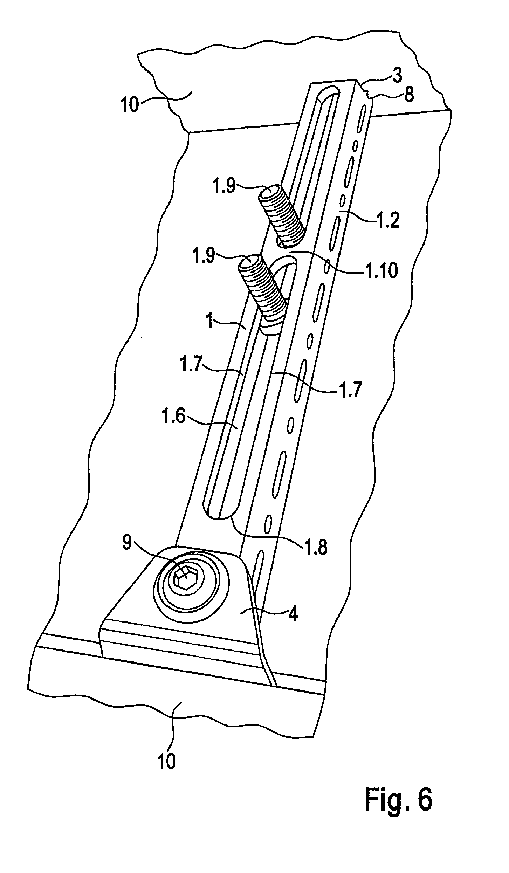

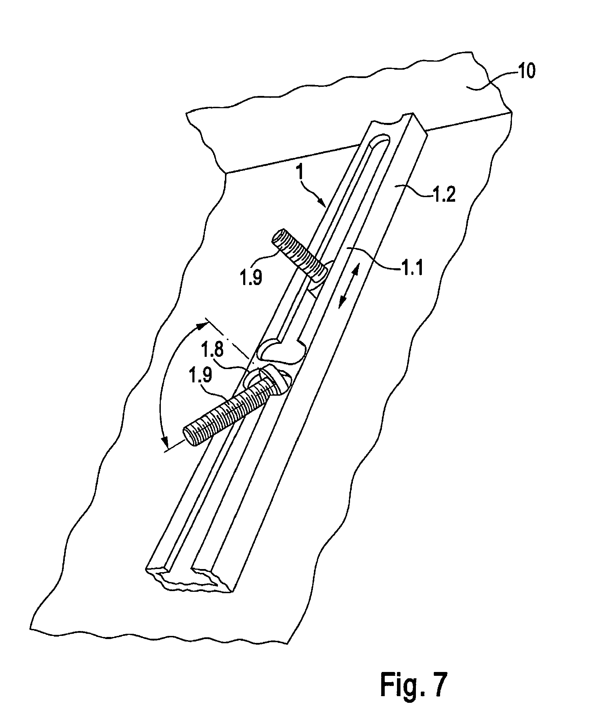

Bei der in den Figuren 6 und 7 dargestellten Ausführungsform der Erfindung weist der Montageabschnitt 1 Befestigungsaufnahmen 1.3 auf, die als Langloch 1.6 ausgebildet sind. Die Langlöcher 1.6 erstrecken sich entlang der Längsrichtung der Montageseite 1.1. Das Langloch 1.6 ist von parallelen Seiten 1.7 begrenzt, wobei die parallelen Seiten 1.7 einen Abstand aufweisen, der größer als der Durchmesser des Schaftes des Bolzens 1.9 und kleiner als der Durchmesser des Kopfstücks des Bolzens 1.9 ist. Durch dieses Größenverhältnis von Abstand der Seiten 1.7 und Schaft- bzw. Kopfstück-Durchmesser wird erreicht, dass die Bolzen 1.9 die Montageseite 1.1 im eingesetzten Zustand hintergreifen. Eine Aufweitung 1.8 dient zum Einfädeln der Bolzen 1.9 in die Langlöcher 1.6. Bei dieser Ausführungsform ist der Montageabschnitt 1 vorzugsweise als ein U-Profil ausgebildet, so dass die Kopfstücke im eingesetzten Zustand ausreichend Bewegungsspielraum zwischen der Gehäusewand und der Unterseite der Montageseite 1.1 haben. In den Langlöchern 1.6 der Montageseite 1.1 können die parallelen Flansche 1.2 ebenfalls über eine Systemlochung verfügen, vorliegend bestehend aus zwei Reihen von abwechselnd angeordneten kreisrunden Bohrungen und rechteckigen Langlöchern. Der Stützabschnitt 3 wird unmittelbar von einem freien Ende des Montageabschnitts 1 gebildet, wobei auch dieser zweckmäßigerweise mit Krallen 8 für die Herstellung einer kraftschlüssigen Verbindung mit der Gehäusewand 10 versehen ist.

Die Montageseite 1.1 weist vorliegend zwei sich entlang der Längsrichtung der Montageseite 1.1 erstreckende Langlöcher auf, die in Längsrichtung der Montageseite 1.1 hintereinander und beabstandet voneinander angeordnet sind. An der Stelle, wo die Langlöcher 1.1 aneinandergrenzen, werden sie durch einen Steg 1.10 voneinander getrennt. Durch den Steg 1.10 wird gewährleistet, dass der Montageabschnitt trotz der Langlöcher 1.6 noch eine ausreichende Reststabilität aufweist.

Im einfachsten Fall sind die Bolzen 1.9 Maschinenschrauben oder dergleichen, welche, wie in Figur 7 dargestellt, über die Aufweitungen 1.8 mit ihrem Kopf in den Montageabschnitt eingesetzt werden können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Montageabschnitt
- 1.1: Montageseite
- 1.2: Abkantung
- 1.3: Befestigungsaufnahme
- 1.4: Umkantung
- 1.5: freies Ende der Umkantung
- 1.6: Langloch
- 1.7: Seite des Langlochs
- 1.8: Aufweitung
- 1.9: Bolzen
- 1.10: Steg
- 2: Spannabschnitt
- 3: Stützabschnitt
- 4: Kniehebel
- 4.1: Befestigungsseite
- 4.2: Spannseite
- 4.3: Flansch
- 5: Erste Bohrung
- 6: Zweite Bohrung
- 7: Gewindeaufnahme
- 8: Kralle
- 9: Schraube
- 10: Gehäusewand
- 11: Winkelstück
- 12: Aussparung
- α: stumpfer Winkel

## Patentansprüche

1. Montageschiene für den Innenausbau eines Schaltschrankgehäuses, mit einem Montageabschnitt (1), der an seinem ersten Ende einen Spannabschnitt (2) und an seinem dem ersten Ende gegenüber angeordneten zweiten Ende einen Stützabschnitt (3) aufweist, **dadurch gekennzeichnet, dass** der Spannabschnitt (2) einen Kniehebel (4) aufweist, mit einer Befestigungsseite (4.1), über welche der Kniehebel (4) lösbar mit dem ersten Ende des Montageabschnitts (1) verschraubt ist, und mit einer Spannseite (4.2), die mit der Befestigungsseite (4.1) einen stumpfen Winkel (α) einschließt.

2. Montageschiene nach Anspruch 1, **dadurch gekennzeichnet, dass** der Montageabschnitt (1) als U-Profil ausgebildet ist, mit einer Montageseite (1.1), die zwei Abkantungen (1.2) voneinander beabstandet, wobei die Montageseite (1.1) mindestens eine Befestigungsaufnahme (1.3) aufweist.

3. Montageschiene nach Anspruch 1 oder 2, **dadurch gekennzeichnet, dass** das erste Ende des Montageabschnitts (1) eine Umkantung (1.4) aufweist, deren freies Ende (1.5) sich parallel beabstandet zu der Montageseite (1.1) erstreckt, wobei die Befestigungsseite (4.1) auf der Umkantung (1.4) schwenkbar gelagert ist.

4. Montageschiene nach einem der Ansprüche 1 bis 3, **dadurch gekennzeichnet, dass** der Kniehebel (4) einstückig ausgebildet ist, wobei die Befestigungsseite (4.1) und die Spannseite (4.2) als Abkantungen ausgebildet sind.

5. Montageschiene nach Anspruch 2 oder 3, **dadurch gekennzeichnet, dass** der Kniehebel (4) als ein U-Profil ausgebildet ist, das entlang seiner Innenseite auf dem Montageabschnitt (1) aufgesetzt ist, wobei der Kniehebel (4) parallele Flansche (4.3) aufweist, die trapezförmig ausgebildet sind, und wobei die Spannseite (4.2) von dem freien Ende des U-Profils gebildet wird, das von dem Montageabschnitt (1) abgewandt angeordnet ist.

6. Montageschiene nach einem der vorangegangenen Ansprüche, **dadurch gekennzeichnet, dass** die Befestigungsseite (4.1) eine erste Bohrung (5) aufweist, die mit einer zweiten Bohrung (6) des ersten Endes des Montageabschnitts (1) sowie mit einer Gewindeaufnahme (7) des Montageabschnitts (1) fluchtet.

7. Montageschiene nach einem der vorangegangenen Ansprüche, **dadurch gekennzeichnet, dass** der Stützabschnitt (3) an seinem von dem Montageabschnitt (1) abgewandten Ende, oder die Spannseite (4.2) an ihrem von dem Montageabschnitt (1) abgewandten Ende mindestens eine Kralle (8) aufweist, oder dass beide mindestens eine Kralle (8) aufweisen.

8. Montageschiene nach einem der Ansprüche 2 bis 7, **dadurch gekennzeichnet, dass** die Befestigungsaufnahme (1.3) ein Langloch (1.6) aufweist, das sich entlang der Längsrichtung der Montageseite (1.1) erstreckt, wobei das Langloch (1.6) von parallelen Seiten (1.7) begrenzt ist, die einen Abstand aufweisen, der größer als der Durchmesser eines Schaftes eines Bolzens (1.9) und kleiner als der Durchmesser eines Kopfstücks des Bolzens (1.9) ist.

9. Montageschiene nach Anspruch 8, **dadurch gekennzeichnet, dass** das Langloch (1.6) eine Aufweitung (1.8) aufweist, bei der der Abstand der parallelen Seiten (1.7) größer als der Durchmesser des Kopfstücks des Bolzens (1.9) ist.

10. Montageschiene nach Anspruch 8 oder 9, **dadurch gekennzeichnet, dass** die Montageseite (1.1) mindestens zwei sich entlang der Längsrichtung der Montageseite (1.1) erstreckende Langlöcher (1.6) aufweist, die in Längsrichtung der Montageseite (1.1) hintereinander und beabstandet voneinander angeordnet sind, wobei jeweils benachbarte Langlöcher (1.6) durch einen Steg (1.10), der die beiden Abkantungen (1.2) miteinander verbindet, voneinander getrennt sind.

## Claims

1. A mounting rail for the interior construction of a switch cabinet housing, said mounting rail comprising a mounting section (1) that has a clamping section (2) at its first end and a support section (3) at its second end opposite the first end, **characterized in that** the clamping section (2) has a knee lever (4) with a fastening side (4.1), via which the knee lever (4) is detachably screwed to the first end of the mounting section (1) and with a clamping side (4.2) that includes an obtuse angle (α) with the fastening side (4.1).

2. The mounting rail of claim 1, **characterized in that** the mounting section (1) is shaped as a U profile, with a mounting side (1.1) which keeps two folded edges (1.2) spaced apart from one another, said mounting side (1.1) comprising at least one attachment seat (1.3).

3. The mounting rail of claim 1 or 2, **characterized in that** the first end of the mounting section (1) comprises a bend (1.4), the free end (1.5) thereof extending spaced from and parallel to the mounting side (1.1), the fastening side (4.1) being swivel-mounted on the bend (1.4).

4. The mounting rail of any of claims 1 to 3, **characterized in that** the knee lever (4) is formed in one piece, the fastening side (4.1) and the clamping side (4.2) being folded edges thereof.

5. The mounting rail of claim 2 or 3, **characterized in that** the knee lever (4) is shaped as a U profile which sits on the mounting section (1) along its inner side, the knee lever (4) comprising parallel flanges (4.3) which are trapezoidal, and the clamping side (4.2) being formed by the free end of the U profile facing away from the mounting section.

6. The mounting rail of any of the preceding claims, **characterized in that** the fastening side (4.1) comprises a first hole (5) which is aligned with a second hole (6) of the first end of the mounting section (1) as well as with a threaded seat (7) of the mounting section (1).

7. The mounting rail of any of the preceding claims, **characterized in that** the support section (3), at an end facing away from the mounting section, or the clamping side (4.2), at an end facing away from the mounting section (1), comprises at least one claw (8) or that both of them comprise at least one claw (8).

8. The mounting rail of any of claims 2 to 7, **characterized in that** the attachment seat (1.3) comprises a slotted hole (1.6) extending in longitudinal direction of the mounting side (1.1), the slotted hole (1.6) being bordered by parallel sides (1.7) having a spacing which is greater than a diameter of a shaft of a bolt (1.9) and smaller than a diameter of a head end of the bolt (1.9).

9. The mounting rail of claim 8, **characterized in that** the slotted hole (1.6) comprises an extension (1.8) where the spacing of the parallel sides (1.7) is greater than the diameter of the head end of the bolt (1.9).

10. The mounting rail of claim 8 or 9, **characterized in that** the mounting side (1.1) comprises at least two slotted holes (1.6) extending in longitudinal direction of the mounting side (1.1) which are arranged behind one another and spaced from another, wherein neighboring slotted holes (1.6) are separated by a bridge (1.10) joining the two folded edges (1.2).

## Revendications

1. Rail de montage pour l'aménagement interne d'un boîtier d'armoire de commande, avec une portion de montage (1), qui comprend, au niveau son première extrémité, une portion de serrage (2) et, au niveau de sa deuxième extrémité disposée en face de la première extrémité, une portion d'appui (3), **caractérisé en ce que** la portion de serrage (2) comprend un levier coudé (4), avec un côté de fixation (4.1) par l'intermédiaire de laquelle le levier coudé (4) est vissé de manière amovible avec la première extrémité de la portion de montage (1), et avec un côté de serrage (4.2), qui forme avec le côté de fixation (4.1) un angle obtus (α).

2. Rail de montage selon la revendication 1, **caractérisé en ce que** la portion de montage (1) est conçue comme un profilé en U, avec un côté de montage (1.1) qui maintient éloignés deux replis (1.2), le côté de montage (1.1) comprenant au moins un logement de fixation (1.3).

3. Rail de montage selon la revendication 1 ou 2, **caractérisé en ce que** la première extrémité de la portion de montage (1) comprend un rebord (1.4) dont l'extrémité libre (1.5) s'étend parallèlement au côté de montage (1.1), le côté de fixation (4.1) étant logé de manière pivotante sur le rebord (1.4).

4. Rail de montage selon l'une des revendications 1 à 3, **caractérisé en ce que** le levier coudé (4) est formé d'une seule pièce, le côté de fixation (4.1) et le côté de serrage (4.2) étant conçus comme des replis.

5. Rail de montage selon la revendication 2 ou 3, **caractérisé en ce que** le levier coudé (4) est conçu comme un profilé en U qui est posé, le long de son côté interne, sur la portion de montage (1), le levier coudé (4) comprenant des brides parallèles (4.3) de forme trapézoïdale et le côté de serrage (4.2) étant constitué de l'extrémité libre du profilé en U, qui est opposée à la portion de montage (1).

6. Rail de montage selon l'une des revendications précédentes, **caractérisé en ce que** le côté de fixation (4.1) présente un premier alésage (5) qui est aligné avec un deuxième alésage (6) de la première extrémité de la portion de montage (1) ainsi qu'avec un logement fileté (7) de la portion de montage (1).

7. Rail de montage selon l'une des revendications précédentes, **caractérisé en ce que** la portion d'appui (3) comprend, au niveau de son extrémité opposée à la portion de montage (1) ou le côté de serrage (4.2) comprend, au niveau de son extrémité opposée à la portion de montage (1), au moins une griffe (8) ou **en ce que** les deux comprennent au moins une griffe (8).

8. Rail de montage selon l'une des revendications 2 à 7, **caractérisé en ce que** le logement de fixation (1.3) présente un trou oblong (1.6) qui s'étend le long de la direction longitudinale du côté de montage (1.1), le trou oblong (1.6) étant limité par des côtés parallèles (1.7) qui sont disposés à une distance supérieure au diamètre d'une tige d'un boulon (1.9) et inférieure au diamètre d'une pièce de tête du boulon (1.9).

9. Rail de montage selon la revendication 8, **caractérisé en ce que** le trou oblong (1.6) présente un élargissement (1.8) dans lequel la distance entre les côtés parallèles (1.7) est supérieure au diamètre de la pièce de tête du boulon (1.9).

10. Rail de montage selon la revendication 8 ou 9, **caractérisé en ce que** le côté de montage (1.1) comprend au moins deux trous oblongs (1.6) s'étendant le long de la direction longitudinale du côté de montage (1.1), qui sont disposés l'un derrière l'autre dans la direction longitudinale du côté de montage (1.1) et écartés les uns des autres, des trous oblongs adjacents (1.6) étant séparés entre eux par une nervure (1.10) qui relie entre eux les deux replis (1.2).
